(19) Europäisches Patentamt
European Patent Office
Office européen des brevets

(11) EP 2 151 465 A1

(12) EUROPEAN PATENT APPLICATION

(43) Date of publication:
**10.02.2010 Bulletin 2010/06**

(51) Int Cl.:
***C08G 64/30*** *(2006.01)*

(21) Application number: **08290749.4**

(22) Date of filing: **31.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
- **Total Petrochemicals Research Feluy**
  **7181 Seneffe (Feluy) (BE)**
- **Centre National de la Recherche Scientifique**
  **75016 Paris (FR)**

(72) Inventors:
- **Helou, Marion**
  **35000 Rennes (FR)**
- **Guillaume, Sophie**
  **35500 Vitré (FR)**
- **Carpentier, Jean-François**
  **35690 Acigne (FR)**
- **Miserque, Olivier**
  **1435 Mont-Saint-Guibert (BE)**

(74) Representative: **Roufosse, Micheline C. et al**
**Total Petrochemicals Research Feluy**
**Patent Department**
**Zone Industrielle C**
**7181 Seneffe (Feluy) (BE)**

(54) **Catalytic process for polymerising cyclic carbonates issued from renewable resources**

(57) This invention relates to the polymerisation of five-, six- or seven-membered cyclic carbonates by ring-opening polymerisation in the presence of a system comprising a metal salt such as triflate, triflimidate, acetylacetonate or carboxylate and an alcohol.

EP 2 151 465 A1

## Description

This invention relates to the synthesis of polycarbonates prepared from cyclic monomers derived from the biomass in the presence of a system comprising a metal catalyst and a transfer agent. It also relates to the resulting polymers derived from these cyclic monomers.

Several methods have been developed to prepare polycarbonates. The starting material is selected either from a five- or from a six-membered carbonate monomer. There is an abundant literature describing the synthesis of these compounds.

The synthesis of six-membered carbonates is described for example in Bhanage et al. (Bhanage B.M., Fujita S., Ikushima Y., Arai M., in Green Chemistry, 5, 429, 2003), or in Wang et al. (Wang X.L., Zhuo, R.X., Liu L.J., He F., Liu G., in J. Polym. Sci. Part A, 40, 70, 2002), or in Wolinsky et al. (Wolinsky J.B., Ray III W.C., Colson Y.L., Grinstaff M.W., in Macromolecules, 40, 7065, 2007, or in Gasset et al (EP-A-0,955,298).

The synthesis of five-membered carbonates is described for example in Aresta and Dibenedetto (Aresta M., Dibenedetto A., J. Mol. Catal. A: Chem., 257, 149, 2006) or in Robicki et al. (Robicki G., Rakoczy P., Parzuchowski P., in Green Chem., 7, 529, 2005) or in Ubaghs et al. (Ubaghs L., Fricke N., Keul H., Hôcker H., in Macromol. Rapid Comm., 25, 517, 2004), or in Komura et al. (Komura H., Yoshino T., Ishido Y., in Bulletin of the chemical society of Japan, 46, 550, 1973) or in Matsumoto et al. (Matsumoto K., Fuwa S., Shimojo M., Kitajima H., in Bull. Chem. Soc. Jpn, 69, 2977, 1996).

Polymerisation of carbonates was typically carried out by ring-opening of the five- or six-membered carbonates either by organometallic catalysis or by organic catalysis. The advantage of organometallic catalysis was that it offers a controlled polymerisation. The most frequently used catalytic components were based on

- $Sn(Oct)_2$ as described for example in Kricheldorf and Stricker (Kricheldorf H.R., Stricker A., in Macromol. Chem. Phys. 201, 2557, 2000)
- or biocompatible metals such as Mg, Ca, Fe or Zn as described for example in Darensbourg et al. (Darensbourg D., Wonsook C., Poulomi G., Casseday R., in Macromol. 37, 4374, 2006) or in Dobrzinsky et al. (Dobrzinsky P., Pastusiak M., Bero M., in J. Polym. Sci. Part A Polym. Chem., 43, 1913, 2004) or in Kuran et al. (Kuran W., Sobczak M., Listos T., Debek C., Florjanczyk Z., in Polymer. 41, 8531, 2000)
- or group 3 metal (including the lanthanide series) complexes such as described for example in Palard et al. (Palard I., Schappacher M., Belloncle B., Soum A., Guillaume S., in Chem. Eur. J. 13, 1511, 2007) or in Zhao et al. (Zhao B., Lu C., Shen Q., in J. Appl, Polym. Sci., 25, 517, 2004) or in Sheng et al. (Sheng H., Zhou L., Zhang Y., Yao Y., Shen Q., in J. Polym. Sci. Part A Polym. Chem., 45, 1210, 2407).

The advantage of organic catalysis was that it offered polymerisation under mild conditions with non-metal catalyst components. They were based on

- enzymes such as described for example in Bisht et al. (Bisht S.K., Svirkin Y.Y., Henderson L.A., Gross R.A., in Macromolecules, 30, 7735, 1997) or in Gross et al. (Gross R.A., Kumar A., Kalra B., in Chem. Rev., 101, 2109, 2001) or in Koboyashi et al. (Koboyashi S., Uyama H., Kimura S., in Chem. Rev., 101, 3793, 2001).
- organic compounds such as amines or guanidine as described for example in Nederberg et al. (Nederberg F., Lohmeijer G.B., Leibfarth F., Pratt R.C., Choi J., Dove A.P., Waymouth R.M., Heidrich J.L., in Biomacromolecules, 8, 153, 2007) or in Mindemark et al. (Mindemark J., Hilborn J., Bowden T., in Macromolecules, 40, 3515, 2007). They can also be based on strong Brönsted acids such as triflic acid as described for example in Kricheldorf, H. R. et al. (Kricheldorf, H. R. Weegen-Schulz, B. Jenssen, J. Macromolecular Symposia 1992, 60, 119-131) or in Endo T. et al (Endo T. Ariga, T. Takata, T. Macromolecules, 1997, 30, 737-744).

On the other hand, Lewis acids based on metal groups 2, 3, 4, 12, 13 such as magnesium, calcium, scandium, yttrium, cerium, samarium, ytterbium, zirconium, zinc, aluminum and tin triflates or triflimidates are known to be effective catalysts, in combination with a protic source such as an alcohol or a carboxylic acid, for the ring-opening polymerisation of cyclic esters such ε-caprolactone and lactide, as described for example in Moller et al. (Moller M., Kange R., Hedrick J.L., in J. Polym. Sci. A : Polym. Chem., Vol.38, 2067-2074 (2000)), in Nomura et al. (Nomura N., Taira A., Nakase A., Tomioka T., Okada M., in Tetrahedron, Vol.63, 8478-8484 (2007)), in Nomura et al. (Nomura N., Taira A., Tomioka T., Okada M., in Macromolecules, Vol.33, 1497-1499 (2000)), in Isobe et al. (Isobe, Y., Nakano T., Okamoto Y., in J. Polym. Sci. A : Polym. Chem., Vol.39, 1463-1471 (2001)), in Nemoto et al. (Nemoto T., Ando D., Naka K., Chujo Y., in J. Polym. Sci. A : Polym. Chem., Vol.45, 543-547 (2007)), in Wang et al. (Wang Y., Kunioka M., in Macromol. Symp. Vol.224, 193-205 (2005)), in Kunioka et al. (Kunioka M., Wang Y., Onozawa S.Y., in Macromol. Symp. Vol.224, 167-179 (2005)), in Satoh et al. (Satoh K., Kamigaito M., Sawamoto M., in Macromolecules, Vol.33, 5836-5840 (2000)), in Gorczynski et al. (Gorczynski J.L., Chen J., Fraser C.L., in JACS, Vol.127, 14 956-14 957 (2005)), in Dobrzynski et al. (Dobrzynski P., Pastusiak M., Bero M., in J. Polym. Sci. A : Polym. Chem., Vol.43, 1913-1922 (2005)),

It is an aim of the present invention to provide a method for polymerising cyclic carbonate compounds using small amounts of a metal catalyst.

It is another aim of the present invention to use, in combination with the small amounts of the metal catalyst, large amounts of a transfer agent to achieve so-called "immortal" polymerisation of cyclic carbonate compounds.

It is a further aim of the present invention to control and tune the characteristics and properties of the resulting polycarbonates.

In particular, it is another aim to prepare functionalised polycarbonates selectively end-capped by a group originating from the transfer agent.

It is yet another aim of the present invention to apply the method of the immortal ring-opening polymerisation to new cyclic carbonates derived from glycerol.

It is yet a further aim of the present invention to develop a catalyst sytem operative on technical grade carbonate monomers, without specific preliminary purification.

Any one of those aims is, at least partially, fulfilled by the present invention.

**List of figures.**

Figure 1 represents the $^1$H NMR spectrum of the precipitated polymer prepared in example 1.

Accordingly, the present invention discloses a process for polymerising five- or six- or seven-membered cyclic carbonates by ring-opening polymerisation in the presence of a system comprising a metal salt such as triflate, triflimedate, acetylacetonate or carboxylate and an alcohol, **characterised in that** the number average molecular weight Mn of the final polymer is controlled by the monomer/alcohol ratio.

The alcohol is acting as co-activator and as transfer agent.

The metallic salt can be selected from metallic complexes of formula $M(OSO_2CF_3)_n$, hereafter referred to as triflates or OTf or $M(N(OSO_2CF_3)_2)_n$, hereafter referred to as triflimidates or $NTf_2$ or $M(RC(O)CR_2C(O)R)_n$, hereafter referred to as acetylacetonates or acac or $(R''CO_2)_nM$, hereafter referred to as carboxylates, wherein M is a metal Group 2, 3, including the lanthanide series, hereafter referred as Ln, 4, 12, 13, 14 or 15 of the periodic Table, wherein each R is selected independently from a linear or branched hydrocarbyl radical having from 1 to 12 carbon atoms, substituted or not by for instance an halogen or heteroatom, wherein each R" is selected independently from a perfluorinated alkyl or aryl residue having from 1 to 12 carbon atoms, and wherein n is the valence of M.

Preferably, M is Mg(II), Ca(II), Sc(III), Y(III), Sm(III), Yb(III), Zr(IV), Fe(II), Fe(III), Zn(II), Al(III) Sn(IV) or Bi(III). More preferably, it is Al, Zn or Sc, Al being the most efficient metal.

Preferably each R is selected independently from a alkyl group such as $CH_3$ or a substituted alkyl group such as $CF_3$, More preferably, they are all the same and they are $CF_3$.

Preferably, R" is $(C_6F_5)$ or $(CF_3)$, or $CF_3(CF_2)_m$ wherein m is an integer from 1 to 6.

The alcohol can be represented by formula R'OH wherein R' is an hydrocarbyl, linear or branched, having from 1 to 20 carbon atoms. Preferably R' is a secondary alkyl residue or benzylic group, more preferably it is isopropyl ($^i$Pr) or benzyl (Bn).

Among the preferred catalytic compounds according to the present invention, one can cite $Al(OTf)_3$, $Al(NTf_2)_3$, $Mg(OTf)_2$, $Ca(OTf)_2$, $Zn(OTf)_2$, $Sc(OTf)_3$, $Bi(OTf)_3$, $Fe(acac)_3$, $Al(OCOCF_3)_3$, $ZN(OCOCF_3)_2$, $Zn(acac)_2$.

In these embodiments, the catalyst system also comprises an alcohol.

In the present invention, the catalyst system operates via a so-called "activated monomer pathway". That means that the metal centre of the metal salt behaves as a Lewis acid onto which the carbonyl function of the monomer coordinates in the course of catalysis. This results eventually in an increase of the electrophilicity at the carbon atom of the monomer carbonyl group, which is therefore prone to being attacked by an external nucleophile such as the alcohol co-catalyst, or any other protic source such as for example water or carboxylic acid.

The present mechanism differs from the so-called "coordination-insertion" mechanism. In the present mechanism, the nucleophile is external in that it is not sigma-bonded to the metal center in the pre-catalyst, while in the coordination-insertion mechanism, the nucleophile is included in the pre-catalyst and active catalyst as a sigma-bonded ligand of the metal complex, under the form of an alkoxide, amide or borohydride group.

In the current "activated monomer pathway", the alcohol plays two roles:

- as an external nucleophile for initiating the polymerisation via the ring-opening of the activated monomer; 1 equivalent of alcohol per metal centre is used in the process;
- as a transfer agent, by generating multiple polymer chains; all excess alcohol molecules are used in this second process, and the final molecular weight of the polymer is a function of the alcohol-to-monomer ratio.

It can be represented schematically as follows:

1. Initiation mechanism by ring opening (ROP) of the activated monomer

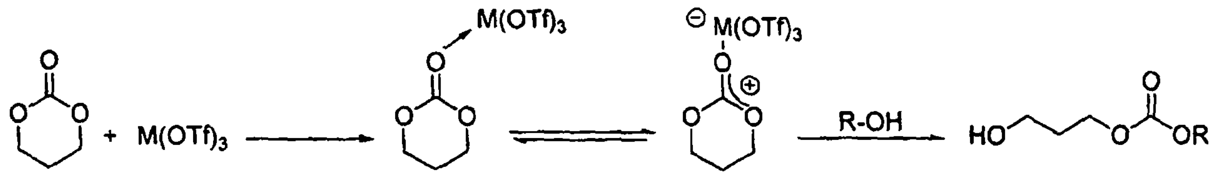


2. Propagation and Transfer mechanism

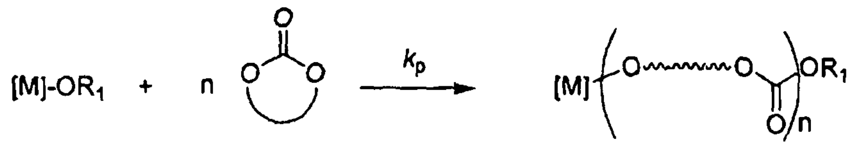


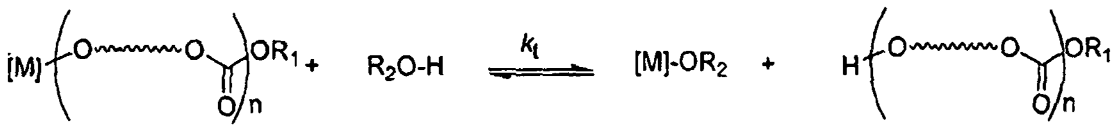


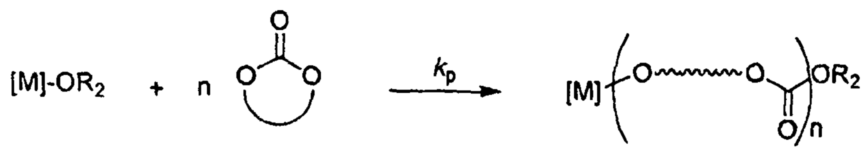


In the "coordination-insertion" mechanism, the alcohol also plays two roles but in a different manner:

- the alcohol transforms the pre-catalyst, that has little or no activity, into an active alkoxide-metal species, via an alcoholysis process;
- as a transfer agent like in the other mechanism.

Excess alcohol acts as transfer agent, transferring propagating polycarbonate chains from the active metal center to dormant hydroxy-end capped polycarbonate chains. Accordingly, it is observed that the number average molecular weight increases when the monomer/alcohol ratio increases.

Optionally, the alcohol can contain a functional group which will be selectively capping the terminus of each polycarbonate chain. This functional group can be used for various purposes. As non-limitating examples, one can cite:

a) vinyl end-groups which can (i) promote further copolymerisation with other olefin-type monomers; or (ii) be transformed into other functional groups such as for instance epoxide, alcohol, or 1,2-diol.

b) nitroxide or alkoxyamine end-groups which can promote controlled radical polymerisation and/or ring-opening polymerisations,

c) fluorinated pony-tails.

The system described in the present invention allows transforming very large amounts of monomer with minute amounts of metal catalyst.

Polymerisation can be carried out in bulk or in solution. Usual aromatic and aliphatic hydrocarbons can be used for that purpose.

Polymerisation is conducted at a temperature ranging from 20 °C to 180 °C, preferably between 100 and 150 °C. The pressure ranges from 0.5 to 20 atm, preferably it is 1 atm.

The polycarbonates thus prepared show typically a unimodal molecular weight distribution that ranges from 1.1 to 5.0, more typically from 1.5 to 1.8.

The number average molecular weight Mn can be tuned by the monomer-to-alcohol ratio and ranges from 1 000 to 1 000 000 glmol, more typically from 10 000 to 250 000 g/mol.

This polymerisation process is operative for 5- to 7-membered cyclic carbonates. Preferably, this polymerisation process is operative for 6-membered cyclic carbonates.

The polycarbonates that can be used in the present invention are selected for example from trimethylenecarbonate (TMC), 2-benzyloxy-trimethylenecarbonate (BTMC), 2-hydroxy-trimethylenecarbonate (TMCOH), 4-(benzyloxymethyl)-1,3-dioxolan-2-one (BDMC), 4-(hydroxymethyl)-1,3-dioxolan-2-one (DMCOH),

In particular, one can cite new cyclic carbonates such as 2-oxy-trimethylenecarbonate (OTMC), and dehydrotrimethylenecarbonate (DHTMC).

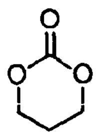
**TMC**

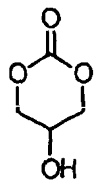
**TMCOH**

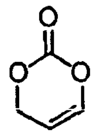
**DHTMC**

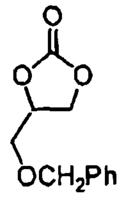
**BDMC**

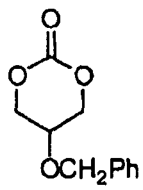
**BTMC**

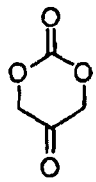
**OTMC**

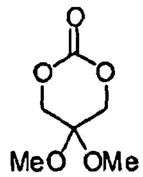
**TMC(OMe)$_2$**

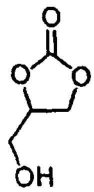
**DMCOH**

Copolymers resulting from any combinations of these monomers are also included in the present invention.

One of the main advantages of the present invention is that the cyclic carbonate monomer does not need to be purified. By unpurified is meant the technical grade taken off the shelf without any further treatment and thus containing water and free acid. The catalyst system of the present invention is very robust and does not have fragile covalent bonds as disclosed in the prior art Zn-based catalyst systems.

**<u>Example.</u>**

The polymerisation of trimethylenecarbonate (TMC) has been carried out with various catalyst components, alcohol initiators and polymerisation conditions.

<u>Example 1.</u>

TMC, purified by drying over calcium hydride and finally recrystallised, was polymerised in the presence of a metal catalyst and an alcohol initiator R'OH.

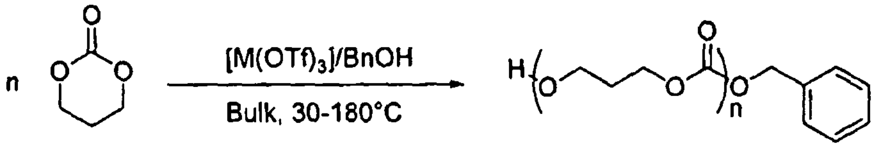


BnOH was selected as the alcohol and the ratio TMC/Metal salt/ROH was set at 500:1:5. The polymerisation temperature and the polymerisation time were varied as indicated in Table I.

The conversion rate expressed in %, the theoretical and experimental number average molecular weight and the polydispersity index PI, represented by Mw/Mn, are disclosed in Table I.

The theoretical number average molecular weight was calculated as

$$Mn_{theo} = [TMC] / [BnOH] \times M_{TMC} \times conversion + M_{BnOH}$$

with $M_{TMC}$ = 102.09 g/mol, $M_{BnOH}$ = 108.14 g/mol

**TABLE I**

| Entry | cat. | Time (min) | T°C | Conv (%) | $M_{ntheo}$ ($g.mol^{-1}$) | $Mn$ NMR ($g.mol^{-1}$) | $M_{nSEC}$ ($g.mol^{-1}$) | $M_w/M_n$ | TON (mol/mol/h) |
|---|---|---|---|---|---|---|---|---|---|
| 1 | $Fe(acac)_3$ | 160 | 110 | 90 | 9 300 | 10500 | 12050 | 1.56 | 169 |
| 2 | $Sc(OTf)_3$ | 150 | 60 | 19 | nd | nd | nd | nd | 38 |
| 3 | $Sc(OTf)_3$ | 120 | 110 | 78 | 8070 | 9380 | 10 100 | 1.47 | 195 |
| 4 | $Al(OTf)_3$ | 30 | 110 | 88 | 9 090 | Nd | 13 500 | 1.57 | 880 |
| 5 | $Al(OTf)_3$ | 60 | 110 | 96 | 9 900 | nd | 13 800 | 1.62 | 480 |
| 6 | $Zn(OTf)_2$ | 180 | 110 | 30 | 3 170 | 2 920 | nd | nd | 50 |
| 7 | $Zn(OTf)_2$ | 30 | 150 | 97 | 10 010 | 9 790 | 11 340 | 1.62 | 970 |
| 8 | Ca(OTf)2 | 120 | 110 | < 10 | nd | nd | nd | nd | < 25 |
| 9 | $Ca(OTf)_2$ | 30 | 150 | 95 | 9 806 | 11 330 | 11 680 | 1.64 | 950 |
| 10 | $Bi(OTf)_3$ | 60 | 110 | 99 | 10 200 | 11500 | 11 900 | 1.45 | 495 |
| 11 | $Bi(OTf)_3$ | 30 | 150 | 99 | 10200 | 10950 | 11 400 | 1.51 | 990 |

The number and weight average molecular weights Mn and Mw, and polydispersity (Mw/Mn)index were determined by Size Exclusion Chromatography (SEC) in THF versus PS standards and corrected with a Mark-Houwink factor of 0.73.

The $^1H$ NMR spectrum of a typical precipitated polymer prepared according to the above procedure can be seen in Figure 1

It can be seen that Al is one of the most efficient metal at 110 °C. It is speculated that the Lewis acidity of the metal plays an important role, the efficiency of the metal increasing with increasing acidity. Aluminum(III) trifalte is very active. High activities are also obtained with bismuth (III), calcium (II) and zinc(II) triflates.

Example 2.

The polymerisation of unpurified trimethylene carbonate was carried out with $Al(OTf)_3$ or $Sc(OTf)_3$ and BnOH. By unpurified is meant the technical grade taken off the shelf without any further treatment and thus containing water and free acid. The ratio TMC/Metal triflate/BnOH was set at 10 000:1:10

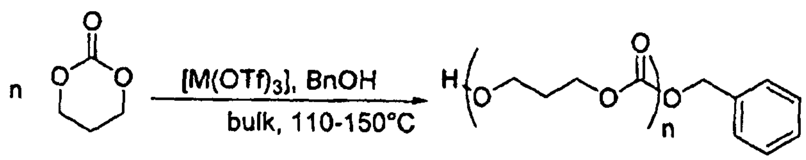


Temp modifiee 110-150

The experimental conditions and results are displayed in Table II.

**TABLE II**

| entry | cat. | T (°C) | Time (min) | Conv (%) | $M_{ntheo}$ (g.mol$^{-1}$) | $M_{nSEC}$ (g.mol$^{-1}$) | $Mw/Mn$ | TON (mol/mol/h) |
|---|---|---|---|---|---|---|---|---|
| 1 | $Sc(OTf)_3$ | 110 | 900 | 76 | 77 580 | 58 900 | 1.76 | 507 |
| 2 | $Sc(OTf)_3$ | 150 | 150 | 85 | 86 880 | 20 200 | 1.30 | 3 400 |
| 3 | $Al(OTf)_3$ | 110 | 120 | 75 | 76 680 | 54 200 | 1.53 | 3 750 |
| 4 | $Al(OTf)_3$ | 150 | 20 | 92 | 104 960 | 61 200 | 1.42 | 27 600 |

It can be seen that very high conversions can be reached with small amounts of metal catalysts, as low as 100 ppm, leading to polycarbonates with high molecular weights and narrow polydispersities.

Example 3.

The polymerisation of technical-grade unpurified trimethylene carbonate was carried out with $Al(OTf)_3$ and the nature of the alcohol was varied. The ratio [TMC]/[Metal triflate]/[R'OH] was set at 10 000:1:10

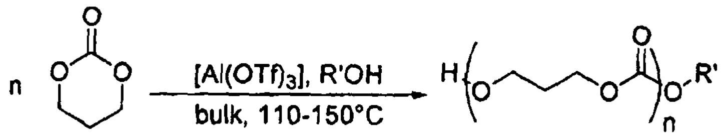


The experimental conditions and results are displayed in Table III.

**TABLE III.**

| entry | [R'OH] | T (°C) | Time (min) | Conv (%) | $M_{ntheo}$ (g.mol$^{-1}$) | $M_{nSEC}$ (g.mol$^{-1}$) | $Mw/Mn$ | TON (mol/mol/h) |
|---|---|---|---|---|---|---|---|---|
| 1 | $PhCH_2OH$ | 110 | 120 | 75 | 76 680 | 54 200 | 1.53 | 3 750 |
| 2 | $PhCH_2OH$ | 150 | 20 | 92 | 104 970 | 61 200 | 1.42 | 27 600 |
| 3 | iPrOH | 110 | 150 | 68 | 69 480 | 44 600 | 1.48 | 2 720 |
| 4 | iPrOH | 150 | 40 | 77 | 78 650 | 26 100 | 1.42 | 11 550 |
| 5 | 2-butanol | 110 | 120 | 64 | 65 410 | 43 200 | 1.52 | 3 200 |
| 6 | 2-butanol | 150 | 20 | 84 | 85 830 | 50 200 | 1.44 | 25 200 |
| 7 | 3 buten-2-ol | 110 | 150 | 59 | 60 850 | 51 560 | 1.59 | 2 360 |
| 8 | 3-buten-2-ol | 150 | 30 | 91 | 93800 | 64 900 | 1.58 | 18 200 |
| 9 | 4-bromophenol | 110 | 150 | 80 | 81 844 | 61 280 | 1.46 | 3 200 |
| 10 | 4-bromophenol | 150 | 30 | 90 | 91 970 | 59320 | 1.52 | 18 000 |

It can be seen that the nature of the alcohol can be varied while maintaining the catalyst performance. The alcohol, however, does affect the catalyst activity, and the best activities are observed with benzyl alcohol (BnOH).

Example 4.

The polymerisation of technical-grade unpurified trimethylene carbonate was carried out with $Al(OTf)_3$ and iPrOH or BnOH as the alcohol. The ratio TMC/Metal triflate/R'OH was varied as shown in Table IV.

$$Mn_{theo} = [TMC] / [R'OH] \times M_{TMC} \times conversion + M_{R'OH}$$

with $M_{TMC}$ = 102.09 g/mol, $M_{BnOH}$ = 108.14 and $M_{iPrOH}$ = 60.10 g/mol
X = amount of chain transfer agent arising from the monomer and calculated from $Mn_{SEC}$ = [TMC] / {X × ([TMC] / [Al]) + ([R'nOH]/ [Al])} × $M_{TMC}$ × conversion
Mn'theo = [TMC] / {Xav + [BnOH]} x $M_{TMC}$ x conversion, with said Xav = average of all 7 X values = 0.0056

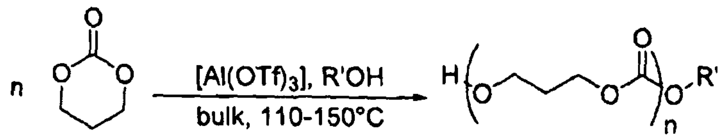


The experimental conditions and results are displayed in Table IV.

**TABLE IV.**

| entry | ROH | [TMC]/[Al]/[Bn OH] | Time (min) | Conv (%) | $M_{ntheo}$ (g.mol$^{-1}$) | $M_{nSEC}$ (g.mol$^{-1}$) | $Mw/Mn$ | TON (mol/mol/h) | X (%) | Mn'$_{theo}$ (g.mol$^{-1}$) |
|---|---|---|---|---|---|---|---|---|---|---|
| 1 | BnOH | 10 000/1/10 | 90 | 92 | 94 030 | 53 200 | 1.56 | 6 130 | 0.076 | 60 262 |
| 2 | iPrOH | 10 000/1110 | 90 | 94 | 96 025 | 61 230 | 1.55 | 6 270 | 0.057 | 61 522 |
| 3 | BnOH | 25 000/1/10 | 240 | 88 | 224 700 | 83 860 | 1.56 | 5 500 | 0.067 | 93 608 |
| 4 | BnOH | 25 00011/20 | 240 | 96 | 122 616 | 70 120 | 1.54 | 6 000 | 0.060 | 72 108 |
| 5 | BnOH | 25 000/1150 | 240 | 84 | 42 990 | 35 770 | 1.56 | 5 250 | 0.040 | 33 580 |
| 6 | BnOH | 50 000/1/20 | 480 | 90 | 229 810 | 102 270 | 1.53 | 5 625 | 0.050 | 95 730 |
| 7 | BnOH | 50 000/1/50 | 480 | 75 | 76 610 | 53 730 | 1.59 | 4 690 | 0.043 | 49 150 |

It can be seen that, for a given [BnOH]/[Al] ratio (e.g. 10, 20 or 50), increasing the monomer loading from 10 000 up to 50 000, results in an increase of the molecular weight of the final polymer recovered. Also, for a given monomer loading (e.g. [TMC]/[Al] = 10 000, 25 000 or 50 000), increasing the [BnOH]/[Al] ratio from 10 to 50, results in a decrease of the molecular weight of the final polymer recovered. This indicates that the molecular weight of the polycarbonate can be controlled by tuning the [TMC]/[Al]/[BnOH] ratio. One can note that the experimental molecular weights are always lower than the values ($M_{ntheo}$) calculated from the [TMC]/[Al]/[BnOH] ratio. This indicates that some impurities contained in the technical-grade monomer also act as transfer agents. The amount of impurities (X) can be evaluated, and is found to be constant for a given batch of monomer. As expected, the $Mn'_{theo}$ values calculated by taking into account X content of impurities fit very well with the $Mn_{SEC}$ values determined experimentally by SEC. This approach allows thus the « at will » preparation of polymers with predetermined molecular weights, based on the [TMC]/[Al]/[BnOH] ratio and the X content of « transfer active » impurities contained in the technical grade monomer.

## Claims

1. A process for polymerising five-, six- or seven-membered cyclic carbonates by ring-opening polymerisation in the presence of a system comprising a metal salt such as triflate, triflimidate, acetylacetonate or carboxylate and an alcohol R'OH wherein R' is an hydrocarbyl, linear or branched having from 1 to 20 carbon atoms, and wherein the number average molecular weight Mn of the final polymer is controlled by the ratio monomer/alcohol.

2. The process of claim 1 wherein the metal salt is selected from metallic complexes of formula $M(OSO_2CF_3)_n$ (OTf) or $M(N(OSO_2CF_3)_2)_n$ ($NTf_2$) or $M(RC(O)CR_2C(O)R)_n$ (acac) or $(R''CO_2)_nM$ (carboxylates), wherein M is a metal Group 2, 3, including the lanthanide series Ln, 4, 12, 13, 14 or 15 of the periodic Table, wherein each R is selected independently from a linear or branched hydrocarbyl radical having from 1 to 12 carbon atoms, substituted or not by for instance an halogen or heteroatom, wherein each R" is selected independently from a perfluorinated alkyl or aryl residue having from 1 to 12 carbon atoms, and wherein n is the valence of M.

3. The process of claim 1 or claim 2 wherein the metal is selected from Mg(II), Ca(II), Sc(III), Y(III), Sm(III), Yb(III), Zr (IV), Fe(II), Fe(III), Zn(II), Al(III), Sn(IV) or Bi(III).

4. The process of any one of the preceding claims wherein the metal salt is $Al(OTf)_3$, $Al(NTf_2)_3$, $Mg(OTf)_2$, $Ca(OTf)_2$, $Zn(OTf)_2$, $Sc(OTf)_3$, $Fe(acac)_3$, $Al(OCOCF_3)_3$, $ZN(OCOCF_3)_2$, $Zn(acac)_2$.

5. The process of any one of the preceding claims wherein in alcohol R'OH, R' is a secondary alkyl residue or a benzilic group.

6. The process of claim 5 wherein the alcohol is isopropyl ($^iPr$) or benzyl (Bn).

7. The process of any one of the preceding claims wherein the alcohol additionally contains a functional group that is capping the end of each polycarbonate chain.

8. The process of any one of the preceding claims to prepare homo- or co-polymers of carbonate and wherein the carbonate is a 5-, 6- or 7-membered cyclic carbonate selected from trimethylenecarbonate (TMC), 2-benzyloxy-trimethylenecarbonate (BTMC), 2-hydroxy-trimethylenecarbonate (TMCOH), 4-(benzyloxymethyl)-1,3-dioxolan-2-one (BDMC), 4-(hydroxymethyl)-1,3-dioxolan-2-one (DMCOH), 2-oxy-trimethylenecarbonate (OTMC), dehydrotrimethylenecarbonate (DHTMC), or a combination thereof.

9. The process of claim 8 wherein the five-, six- or seven-membered carbonates are selected from OTMC or DHTMC.

10. The process of claim 8 or claim 9 wherein the five-, six- or seven-membered carbonate is an unpurified technical-grade product.

11. Homo- or co-polymers of carbonates obtainable by the process of any one of claims 1 to 10.

FIGURE 1

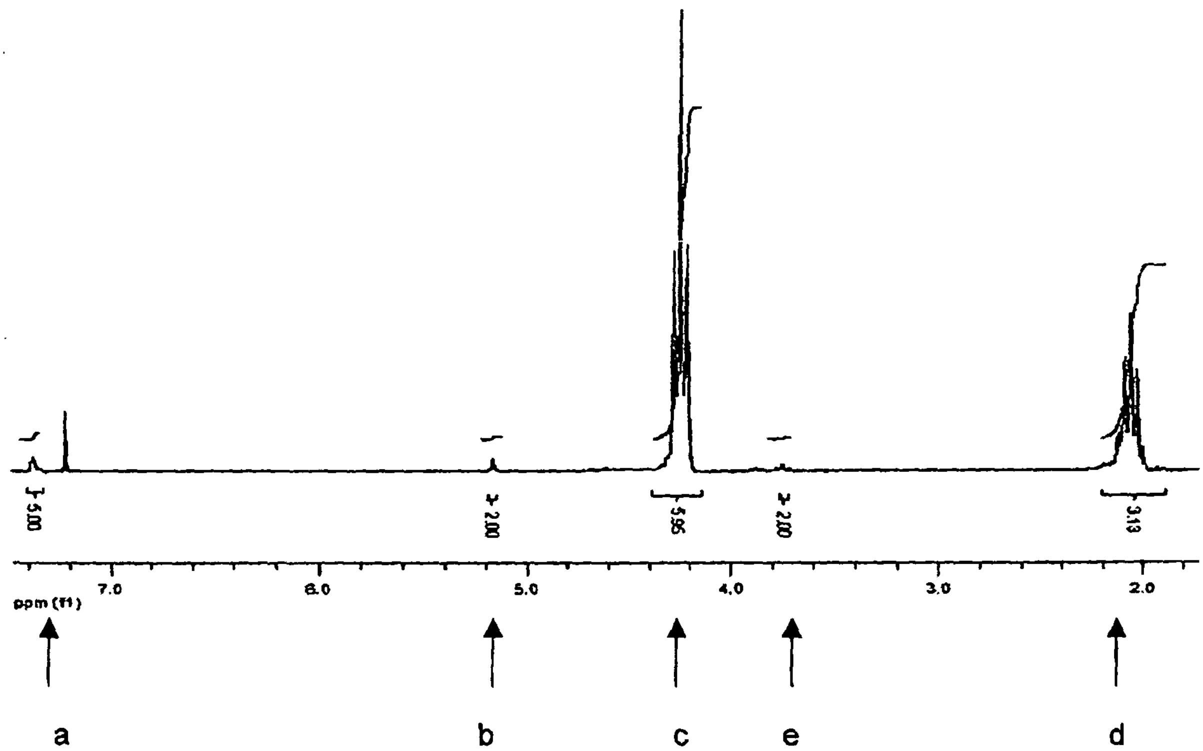


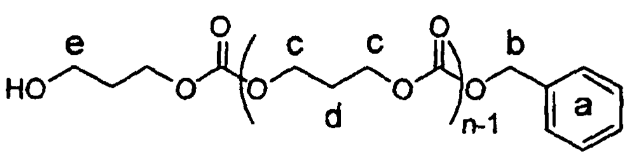

Europäisches Patentamt
European Patent Office
Office européen des brevets

# EUROPEAN SEARCH REPORT

Application Number
EP 08 29 0749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/64771 A (SHELL INT RESEARCH [NL]) 7 September 2001 (2001-09-07)<br>* claims 1,5,8 *<br>* examples 1,2 *<br>----- | 1-11 | INV.<br>C08G64/30 |
| X | EP 0 600 417 A (NIPPON PAINT CO LTD [JP]; DAICEL CHEM [JP]) 8 June 1994 (1994-06-08)<br>* claims 1,2 *<br>* page 4, lines 16-24 *<br>* page 6, lines 5-12 *<br>----- | 1-11 | |
| D,X | HANS KRICHELDORF ET AL: "Polymers of Carbonic Acid"<br>MACROMOLECULAR CHEMISTRY AND PHYSICS, WILEY-VCH VERLAG, WEINHEIM, DE,<br>vol. 201, 12 December 2000 (2000-12-12), pages 2557-2565, XP002499564<br>ISSN: 1022-1352<br>* page 2558 *<br>----- | 1-11 | |

TECHNICAL FIELDS SEARCHED (IPC)
C08G

The present search report has been drawn up for all claims

| Place of search | Date of completion of the search | Examiner |
|---|---|---|
| The Hague | 19 December 2008 | Schlicke, Benedikt |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 29 0749

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2008

| Patent document cited in search report | Publication date | Patent family member(s) | Publication date |
|---|---|---|---|
| WO 0164771 A | 07-09-2001 | AU 5617701 A | 12-09-2001 |
| | | CA 2401493 A1 | 07-09-2001 |
| | | CN 1449422 A | 15-10-2003 |
| | | EP 1259559 A2 | 27-11-2002 |
| | | JP 2003532750 T | 05-11-2003 |
| | | MX PA02008406 A | 12-02-2003 |
| EP 0600417 A | 08-06-1994 | CA 2110359 A1 | 02-06-1994 |
| | | JP 7010920 A | 13-01-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0955298 A, Gasset


### Non-patent literature cited in the description


- **Bhanage B.M. ; Fujita S. ; Ikushima Y. ; Arai M.** *Green Chemistry,* 2003, vol. 5, 429
- **Wang X.L. ; Zhuo, R.X. ; Liu L.J. ; He F. ; Liu G.** *J. Polym. Sci.,* 2002, vol. 40, 70
- **Wolinsky J.B. ; Ray III W.C. ; Colson Y.L. ; Grinstaff M.W.** *Macromolecules,* 2007, vol. 40, 7065
- **Aresta M. ; Dibenedetto A.** *J. Mol. Catal. A: Chem.,* 2006, vol. 257, 149
- **Robicki G. ; Rakoczy P. ; Parzuchowski P.** *Green Chem.,* 2005, vol. 7, 529
- **Ubaghs L. ; Fricke N. ; Keul H. ; Hôcker H.** *Macromol. Rapid Comm.,* 2004, vol. 25, 517
- **Komura H. ; Yoshino T. ; Ishido Y.** *Bulletin of the chemical society of Japan,* 1973, vol. 46, 550
- **Matsumoto K. ; Fuwa S. ; Shimojo M. ; Kitajima H.** *Bull. Chem. Soc. Jpn,* 1996, vol. 69, 2977
- **Kricheldorf H.R. ; Stricker A.** *Macromol. Chem. Phys.,* 2000, vol. 201, 2557
- **Darensbourg D. ; Wonsook C. ; Poulomi G. ; Casseday R.** *Macromol.,* 2006, vol. 37, 4374
- **Dobrzinsky P. ; Pastusiak M. ; Bero M.** *J. Polym. Sci. Part A Polym. Chem.,* 2004, vol. 43, 1913
- **Kuran W. ; Sobczak M. ; Listos T. ; Debek C. ; Florjanczyk Z.** *Polymer,* 2000, vol. 41, 8531
- **Palard I. ; Schappacher M. ; Belloncle B. ; Soum A. ; Guillaume S.** *Chem. Eur. J.,* 2007, vol. 13, 1511
- **Zhao B. ; Lu C. ; Shen Q.** *J. Appl, Polym. Sci.,* 2004, vol. 25, 517
- **Sheng H. ; Zhou L. ; Zhang Y. ; Yao Y. ; Shen Q.** *J. Polym. Sci. Part A Polym. Chem.,* vol. 45, 1210
- **Bisht S.K. ; Svirkin Y.Y. ; Henderson L.A. ; Gross R.A.** *Macromolecules,* 1997, vol. 30, 7735
- **Gross R.A. ; Kumar A. ; Kalra B.** *Chem. Rev.,* 2001, vol. 101, 2109
- **Koboyashi S. ; Uyama H. ; Kimura S.** *Chem. Rev.,* 2001, vol. 101, 3793
- **Nederberg F. ; Lohmeijer G.B. ; Leibfarth F. ; Pratt R.C. ; Choi J. ; Dove A.P. ; Waymouth R.M. ; Heidrich J.L.** *Biomacromolecules,* 2007, vol. 8, 153
- **Mindemark J. ; Hilborn J. ; Bowden T.** *Macromolecules,* 2007, vol. 40, 3515
- **Kricheldorf, H. R. Weegen-Schulz ; B. Jenssen.** *J. Macromolecular Symposia,* 1992, vol. 60, 119-131
- **Endo T. Ariga ; T. Takata.** *T. Macromolecules,* 1997, vol. 30, 737-744
- **Moller M. ; Kange R. ; Hedrick J.L.** *J. Polym. Sci. A : Polym. Chem.,* 2000, vol. 38, 2067-2074
- **Nomura N. ; Taira A. ; Nakase A. ; Tomioka T. ; Okada M.** *Tetrahedron,* 2007, vol. 63, 8478-8484
- **Nomura N. ; Taira A. ; Tomioka T. ; Okada M.** *Macromolecules,* 2000, vol. 33, 1497-1499
- **Isobe, Y. ; Nakano T. ; Okamoto Y.** *J. Polym. Sci. A : Polym. Chem.,* 2001, vol. 39, 1463-1471
- **Nemoto T. ; Ando D. ; Naka K. ; Chujo Y.** *J. Polym. Sci. A : Polym. Chem.,* 2007, vol. 45, 543-547
- **Wang Y. ; Kunioka M.** *Macromol. Symp.,* 2005, vol. 224, 193-205
- **Kunioka M. ; Wang Y. ; Onozawa S.Y.** *Macromol. Symp.,* 2005, vol. 224, 167-179
- **Satoh K. ; Kamigaito M. ; Sawamoto M.** *Macromolecules,* 2000, vol. 33, 5836-5840
- **Gorczynski J.L. ; Chen J. ; Fraser C.L.** *JACS,* 2005, vol. 127, 14 956-14 957
- **Dobrzynski P. ; Pastusiak M. ; Bero M.** *J. Polym. Sci. A : Polym. Chem.,* 2005, vol. 43, 1913-1922